Europäisches Patentamt

European Patent Office

Office européen des brevets

(19)

(11) Publication number: **0 239 343 B1**

(12) ## EUROPEAN PATENT SPECIFICATION

(45) Date of publication of patent specification: **19.05.93** (51) Int. Cl.5: **H01M 4/68**, H01M 10/18

(21) Application number: **87302466.5**

(22) Date of filing: **23.03.87**

(54) Battery element and battery incorporating doped tin oxide coated substrate.

(30) Priority: **24.03.86 US 843047**
**24.03.86 US 843053**

(43) Date of publication of application:
**30.09.87 Bulletin 87/40**

(45) Publication of the grant of the patent:
**19.05.93 Bulletin 93/20**

(84) Designated Contracting States:
**BE DE FR GB IT**

(56) References cited:
EP−A− 0 142 289    EP−A− 0 172 563
FR−A− 863 970     FR−A− 995 222
FR−A− 2 132 440    GB−A− 1 314 891
US−A− 2 564 707

(73) Proprietor: **ENSCI, INC.**
**20717 Prairie Street**
**Chatsworth California 91311(US)**

(72) Inventor: **Pinsky, Naum**
**379 Longview Place**
**Thousand Oaks California 91360(US)**
Inventor: **Alkaitis, Saulius A.**
**16 Thornton Avenue**
**Venice California 90291(US)**
Inventor: **Fitzgerald, Maurice D.**
**517 Upland Road**
**Havertown Pennsylvannia 19083(US)**
Inventor: **Braunstein, David M.**
**540 Green Hill Lane**
**Berwyn Pennsylvannia 19312(US)**

(74) Representative: **Spencer, Graham Easdale et al**
**A.A. Thornton & CO Northumberland House**
**303−306, High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

TECHNICAL FIELD

The present invention relates to battery elements useful in lead–acid batteries. More particularly, the invention relates to battery elements for use in lead–acid batteries, which elements include a substrate having a conductive coating.

BACKGROUND

The conventional lead–acid battery is a multi–cell structure. Each cell comprises a set of vertical positive and negative plates formed of lead–acid alloy grids containing layers of electrochemically active pastes. The paste on the positive plate when charged comprises lead dioxide, which is the positive acting material, and the negative plate contains a negative active material such as sponge lead. An acid electrolyte, based on sulfuric acid, in interposed between the positive and negative plates.

Higher voltages are provided in a bipolar battery including bipolar plates capable of through–plate conduction to serially connected electrodes or cells. The bipolar plates must be impervious to electrolyte and be electrically conductive to provide a serial connection between electrodes.

U.S. Patents 4,275,130; 4,353,969; 4,405,697; 4,539,268; 4,507,372; 4,542,082; 4,510,219; and 4,547,443 relate to various aspects of lead–acid batteries. Certain of these patents discuss various aspects of bipolar plates.

Attempts have been made to improve the conductivity and strength of bipolar plates. Such attempts include the use of conductive carbon particles or filaments such as carbon, graphite or metal in a resin binder. However, carbonaceous materials are oxidized in the aggressive electrochemical environment of the positive plates in the lead–acid cell to acetic acid, which in turn reacts with the lead ion to form lead acetate, which is soluble in sulfuric acid. Thus, the active material is gradually depleted from the paste and ties up the lead as a salt which does not contribute to the production or storage of electricity.

The metals fare no better; most metals are not capable of withstanding the high potential and strong acid environment present at the positive plates of a lead–acid battery. While some metals, such as platinum, are electrochemically stable, their prohibitive cost prevents their use in high volume commercial applications of the lead–acid battery.

We have now developed a battery element suitable for forming a part or the whole of the positive plates in a lead–acid battery and which has substantially improved resistance to the operating environment of such positive plates. Such battery elements are particularly suitable for use in bipolar plates, but are also useful in conventional lead–acid batteries.

According to the present invention, there is provided a battery element useful as at least a portion of the positive plate in a lead–acid battery comprising an acid resistant silica–containing glass coated with electrically conductive doped tin oxide, characterised in that said acid resistant silica–containing glass has a silica content and a composition which provides increased acid resistance relative to E–glass which typically has the following composition:

| silica | 54% by weight |
| alumina | 14% by weight |
| calcia | 18% by weight |
| magnesia | 5% by weight |
| soda + potassium oxide | 0.5% by weight |
| boria | 8% by weight |
| titania + iron oxide | 0.5% by weight |

said increased acid resistance being defined as reduced, relative to said E–glass, weight loss of the said doped tin oxide–coated battery element as the result of corrosion when subjected under normal lead–acid battery use conditions of temperature to 30% by weight lead–acid battery sulfuric acid.

To form a bipolar plate, the battery element according to the invention further comprises a liquid impervious matrix layer having mutually opposing first and second surfaces situated such that at least a portion of the coated glass is embedded in the matrix layer to form a liquid impervious, conductive composite; a positive active electrode material layer located adjacent to the first surface of the matrix layer, provided that a portion of the coated glass contacts the electrode layer; a liquid impervious conductive layer that is resistance to reduction adjacent to the second surface of the matrix layer; and a negative active electrode layer located adjacent to the liquid impervious conductive layer.

As noted previously, in conventional lead – acid batteries, lead dioxide is used as the positive active electrode material and the electrolyte conductivity through the positive active electrode material is required for proper functioning of the battery. However, as the battery discharges, lead sulfate, an electrical insulator is formed from the lead dioxide, an electrical conductor. The present acid resistant glass substrate coated with doped tin oxide may be placed so that at least a portion of the coated substrate contacts the positive active electrode material. Even when some of this positive active material is converted to an electrical insulator, e.g., lead sulfate, the present substrate coated with doped tin oxide provides for electrical conductivity through the positive active material – insulator composition, and thereby improves the perfor – mance of the battery, e.g., a conventional lead – acid battery.

The combination of an acid resistant glass substrate coated with doped tin oxide has substantial electrical, chemical, physical and mechanical properties making it useful as a lead – acid battery element. For example, the element has substantial stability in the presence of, and is impervious to, the sulfuric acid or the sulfuric acid – based electrolyte. The doped tin oxide coating on the acid resistant glass substrate provides for increased electrochemical stability and reduced corrosion in the terribly aggressive, oxidative – acidic conditions present on the positive side lead – acid batteries.

Any suitable dopant may be used to dope the tin oxide coating. The dopant or combination of dopants should be such as to be effective to improve the electric conductivity (reduce the resistivity) of the tin oxide coating on the substrate. The preferred dopant for the tin oxide coating is selected from the group consisting of fluoride ion, antimony ion and mixtures thereof. Fluoride ion is particularly preferred since it is especially tolerant of the aggressive environment in a lead – acid battery. The amount of dopant present in the tin oxide coating may vary widely, provided that the amount present is effective to improve the electrical conductivity of the coating, e.g., relative to the conductivity of the coating with no dopant present. If fluoride ion is to be used as a dopant, it is preferred that the fluoride ion be present in the tin oxide coating in an amount in the range of about 0.01 mole % to about 20 mole %, based on the entire doped tin oxide coating, preferably from about 1 mole % to about 10 mole %.

The doped tin oxide coating on the acid resistant glass substrate is typically such that satisfactory electrical conductivity is achieved. This coating may also act to physically protect the substrate from the battery environment. The thickness of the coating may vary widely and depends, for example, on the electric conductivity desired, and on the type and amount of acid resistant substrate. The thickness of the coating may be as little as a molecular mono – layer. Preferably, the doped tin oxide coating has an average thickness in the range of about 0.01 micron ($\mu$m) to about 10 microns ($\mu$m), particularly when the substrate is in the form of glass fibers having an average diameter in the range of about 1 micron ($\mu$m) to about 20 microns ($\mu$m) and the average length to diameter ratio of the glass fibers is in the range of about 100,000 to about 2,000,000.

Any suitable process may be employed to apply the doped tin oxide coating onto the glass substrate. The primary criterion for such processing is that an effective coating results. Where, as is preferred, the acid resistant glass substrate is in the form of particles or fibers, the doped tin oxide coating is preferably applied using spray pyrolysis or a new chemical vapor environment deposition process.

The spray pyrolysis process, which is particularly preferred, comprises spraying a composition comprising a tin component, a dopant – containing material and a solvent onto the glass substrate which is maintained at elevated temperatures, preferably temperatures effective to evaporate at least a major portion of the solvent from the substrate; and subjecting the sprayed substrate to conditions, preferably oxidation conditions at elevated temperatures, effective to form the doped tin oxide coating on the sprayed substrate. The tin component and the dopant – containing material are preferably soluble in the solvent. In a preferred embodiment, the tin component is a hydrolyzable tin component, such as tin alkoxide, tin halide, tin nitrate, mixtures thereof and the like. The solvent comprises a hydroxyl group containing – solvent, such as water, methanol, ethanol, isopropanol, butanol, other alcohols, glycols, mixtures thereof and the like and the tin component forms, at least partially, a tin oxygen bond with one or more groups derived from the solvent. The use of an inorganic tin component and a hydroxyl group – containing solvent provides a coating with outstanding electrical conductivity and ability to withstand the aggressive environment in a lead – acid battery.

Another technique useful to apply the doped tin oxide coating on the substrate is generally referred to as the chemical vapor environment deposition (CVD) process. This process comprises (1) contacting a vaporous composition comprising a tin component and a dopant – containing material with the glass substrate; and (2) contacting the contacted substrate with an oxygen – containing vaporous medium at conditions effective to form the doped tin oxide coating on the substrate. The CVD process is conventional and well known in the art for coating a single flat surface which is maintained in a fixed position during steps (1) and (2). However, in a preferred embodiment, the present glass substrate is in the form of particles, fibers and the like. It has been found that the CVD process technology can be used to apply the doped tin oxide coating to these and other substrates provided that the substrate is maintained in substantially constant three dimensional motion during steps (1) and (2). By "three dimensional motion" is meant that the substrate, e.g., particles, fibers and the like, is in motion about its x axis, its y axis and its z axis. With the substrate being in substantially constant three dimensional motion, each point on the substrate is exposed to substantially the same conditions during steps (1) and (2). This, in turn, leads to a substantially uniform doped tin oxide coating on the substrate.

The substantially constant three dimensional motion of the glass substrate may be provided by mechanical means such as agitators and mixers. However, it is preferred that the motion occur in response to the vaporous composition and vaporous medium contacting the substrate. In other words, it is preferred that the force of the vaporous composition and the vaporous medium be sufficient so that the substrate is put into substantially constant three dimensional motion.

Steps (1) and (2) may occur sequentially, e.g., in a batch system in a single vessel with step (1) preceding step (2). Alternately, steps (1) and (2) may occur substantially simultaneously in at least one fluidized bed reaction zone. In this latter system, the glass substrate is caused to move from one end of the zone to the other end of the zone and to be contacted first as in step (1) and then to be contacted as in step (2). In this manner, a continuous coating operation is provided. More than one fluidized bed reaction zone may be employed.

The tin component and dopant – containing material useful in the present CVD process include any such component and material useful to provide the desired doped tin oxide coating on the glass substrate. Tin components which are conventionally used to coat flat surfaces by the CVD process may be employed. It is preferred to use the solution referred to under spray pyrolysis and that the tin component fluoride ion – forming materials are useful as the dopant – containing material in the present CVD process. Of course, if the dopant is to be other than fluoride ion, the dopant – containing material is to be changed accordingly.

As noted above, the acid resistant glass substrate is preferably in the form of particles or fibers. Because of availability, cost and performance considerations, it is preferred that the substrate be in the form of fibers. The presently useful fibers preferably are in a form selected from the group consisting of fiber rovings, chopped fibers, single fibers, woven fibers and the like. In order to provide improved point – to – point contacting in the fibrous substrate, which is highly desirable for improved conductivity and electrical effectiveness of the lead – acid battery, the glass substrate more preferably is in the form of a body of woven fibers, still more preferably, a body of woven fibers having a porosity in the range of about 60% to about 95%. Porosity is defined as the percent or fraction of void space within a body of woven fibers. The above – noted porosities are calculated based on the woven fibers including the desired doped tin oxide coating.

The glass substrate is more acid resistant than E – glass, i.e., has increased acid resistance relative to E – glass. That is, the glass substrate exhibits increased resistance relative to E – glass to corrosion, erosion and/or other forms of deterioration at the conditions present, e.g., at or near the positive plate, or positive side of the bipolar plates, in a lead – acid battery. Preferably, the acid resistant glass substrate is at least as resistant as is C – glass to the conditions present in a lead – acid battery.

Typical compositions of E – glass and C – glass are as follows:

|  | Weight Percent | |
|  | E-glass | C-glass |
| Silica | 54 | 65 |
| Alumina | 14 | 4 |
| Calcia | 18 | 14 |
| Magnesia | 5 | 3 |
| Soda + Potassium Oxide | 0.5 | 9 |
| Boria | 8 | 5 |
| Titania + Iron Oxide | 0.5 | – |

Preferably the glass contains more than about 60% by weight of silica and less than about 35% by weight of alumina, and alkali and alkaline earth metal oxides.

4

EP 0 239 343 B1

The positive active electrode material is situated so that at least a portion of the electrically conductive doped tin oxide coated glass substrate contacts the electrode material. Any suitable positive active electrode material or combination of materials useful in lead – acid batteries may be employed in the present invention. One particularly useful positive active electrode material comprises electrochemically active lead oxide, e.g., lead dioxide, material. A paste of this material is often used. If a paste is used in the present invention, it is applied so that there is appropriate contacting between the coated substrate and paste.

Any suitable matrix material may be used to embed at least a portion of the doped tin oxide coated substrate. The matrix material should be at least initially fluid impervious to be useful in the present battery elements and batteries. Preferably, the matrix material comprises a polymeric material, e.g., one or more synthetic polymers. The polymeric material may be either thermoplastic or a thermoset material. Thermo – plastic materials are those which can be softened with heat and while soft can be molded, cast, or extruded under pressure. Thermosetting materials are those which are changed chemically by the application of heat to become hard, dense, insoluble, and infusible substances. Among the polymers particularly useful in the present invention are polymers derived from a monomer component comprising a major amount by weight of at least one substantially hydrocarbonaceous compound, more preferably selected from the group consisting of olefins and diolefins (both aliphatic and aromatic) having 2 to about 12 carbon atoms per molecule and a minor amount by weight of at least one additional monomer effective to increase the polarity of the polymer. If the polymeric matrix material is to be a thermoplastic polymer, it is preferred that the matrix be substantially hydrocarbon – based and include one or more groups effective to increase the polarity of the polymer relative to polypropylene. Additive or additional monomers, such as maleic anhydride, vinyl acetate, acrylic acid, and the like and mixtures thereof, may be included prior to polymerization to give the substantially hydrocarbon – based polymer increased polarity. Hydroxyl groups may also be included in a limited amount, using conventional techniques, to increase the polarity of the final substantially hydrocarbon – based polymer.

By "substantially hydrocarbonaceous" and "substantially hydrocarbon – based" is meant those com – pounds and polymers, respectively, which comprise mainly carbon and hydrogen atoms. These compounds and polymers may include minor amounts of one or more non – hydrocarbon groups, e.g., to provide the presently desired increased polarity, provided that such non – hydrocarbon groups do not substantially interfere with the functioning of the present battery elements and batteries. Among the non – hydrocarbon groups which may be included are those groups which contain halogens, sulfur, nitrogen, oxygen, phosphorous and the like.

Among the preferred thermoplastic polymer matrix materials include co – polymers of additional monomers and olefins such as ethylene, propylene, butylenes, pentenes, hexanes, styrene and mixtures thereof. Other preferred thermoplastic polymers include polyvinyldene difluoride, combinations of poly – phenylene oxide and polystyrene and mixtures thereof.

Because of weight and strength considerations, if the polymeric matrix material is to be a thermoplastic polymer, it is preferred that the matrix be a polypropylene – based polymer which includes one or more groups effective to increase the polarity. The preferred additional monomer is maleic anhydride, more preferably present in the polymer in an amount in the range of about 0.1% to about 10% by weight, more preferably about 1% to about 5% by weight.

Thermoset polymers, which have increased polarity relative to polypropylene and are stable at the conditions present in a lead – acid battery, are more preferred for use in the present polymeric matrix materials. The viscosity properties and flexibility of certain of these thermoset polymers provide for ease of manufacturing the coated acid resistant substrate – matrix material composite of the present battery elements. For example, the coated substrate may be at least partially embedded in the thermoset polymer or polymer precursor prior to the final polymerization of the thermoset polymer. More effective bonding of the coated substrate with thermoset polymeric matrix materials is achieved. This bonding is important to provide increased protection for the coated substrate at the aggressive conditions present in lead – acid batteries.

The thermoset polymers useful in the present invention are selected from the group consisting of epoxies, phenol – formaldehyde polymers, polyesters, polyvinyl esters, polyurethanes, melamine – formal – dehyde polymers and urea – formaldehyde polymers. Each of these classes of polymers represents many individual polymers, the composition of which can be varied by selecting different monomers and/or adjusting the ratio or ratios of the monomers used to produce the thermoset polymer. These thermoset polymers may be produced using conventional techniques, well known in the art. Therefore, no further discussion of such techniques is presented here. More preferably, the thermoset polymers are selected from the group consisting of epoxies, phenol – formaldehyde polymers, polyesters and polyvinyl esters.

5

In order to provide enhanced bonding between the doped tin oxide coated substrate and the matrix material, it is preferred that the matrix material have an increased polarity, as indicated by an increased dipole moment, relative to the polarity of polypropylene. Because of weight and strength considerations, if the matrix material is to be a thermoplastic polymer, it is preferred that the matrix be a polypropylene – based polymer which includes one or more groups effective to increase the polarity of the polymer relative to polypropylene. Additive or additional monomers, such as maleic anhydride, vinyl acetate, acrylic acid, and the like and mixtures thereof, may be included prior to propylene polymerization to give the product propylene – based polymer increased polarity. Hydroxyl groups may also be included in a limited amount, using conventional techniques, to increase the polarity of the final propylene – based polymer.

Thermoset polymers which have increased polarity relative to polypropylene, are more preferred for use in the present matrix material. Particularly preferred thermoset polymers include epoxies, phenol – formal – dehyde polymers, polyesters, and polyvinyl esters.

Various techniques, such as casting, molding and the like, may be used to at least partially embed the doped tin oxide coated substrate into the matrix material. The choice of technique may depend, for example, on the type of matrix material used, the type and form of the substrate used and the specific application involved. Certain of these techniques are presented in U.S. Patent 4,547,443, the entire disclosure of which is hereby incorporated by reference herein. One particular embodiment involves pre – impregnating (or combining) that portion of the doped tin oxide coated substrate to be embedded in the matrix material with a relatively polar (increased polarity relative to polypropylene) thermoplastic polymer, such as polyvinylidene difluoride, prior to the coated substrate being embedded in the matrix material. This embodiment is particularly useful when the matrix material is itself a thermoplastic polymer, such as polypropylene, and has been found to provide improved bonding between the doped tin oxide coated substrate and the matrix material.

The bonding between the matrix material and the doped tin oxide coated, acid – resistant substrate is important to provide effective battery operation. In order to provide for improved bonding of the doped tin oxide coating (on the substrate) with the matrix material, it is preferred to at least partially, more preferably substantially totally, coat the doped tin oxide coated substrate with a coupling agent which acts to improve the bonding of the doped tin oxide coating with the matrix. This is particularly useful when the substrate comprises acid resistant glass fibers. Any suitable coupling agent may be employed. Such agents preferably comprise molecules which have both a polar portion and a non – polar portion. Certain materials generally in use as sizings for glass fibers may be used here as a "size" for the doped tin oxide coated glass fibers. The amount of coupling agent used to coat the doped tin oxide coated glass fibers should be effective to provide the improved bonding noted above and, preferably, is substantially the same as is used to size bare glass fibers. Preferably, the coupling agent is selected from the group consisting of silanes, silane – derivatives, titanates, titanate derivatives and mixtures thereof. U.S. Patent 4,154,638 discloses one silane – based coupling agent adapted for use with tin oxide surfaces. The entire disclosure of this patent is hereby expressly incorporated by reference herein.

In the embodiment in which the present battery element is at least a portion of a bipolar plate in a lead – acid battery, it is preferred that the element further comprises a fluid – impervious conductive layer that is resistant to reduction adjacent to, and preferably in electrical communication with, the second surface of the matrix material. The conductive layer is preferably selected from metal, more preferably lead, and substantially non – conductive polymers, more preferably synthetic polymers, containing conductive ma – terial. The non – conductive polymers may be chosen from the polymers discussed previously as matrix materials. One particular embodiment involves using the same polymer in the matrix material and in the conductive layer at a thickness from about 1 to about 20 mils. The electrically conductive material contained in the non – conductive layer preferably is selected from the group consisting of graphite, lead and mixtures thereof.

In the bipolar plate configuration, the present battery element further comprises a negative active electrode layer located to, and preferably in electric communication with the fluid impervious conductive layer. Any suitable negative active electrode material useful in lead – acid batteries may be employed in the present invention. One particularly useful negative active electrode material comprises lead, e.g., sponge lead. Lead paste is often used.

BRIEF DESCRIPTION OF THE DRAWINGS

Figure 1 is a schematic diagram of the series – parallel electrical connection of bipolar and monopolar plates; and

Figure 2 is a cross–section of a bipolar plate for a lead–acid battery incorporating doped tin oxide coated acid resistant glass substrate.

DETAILED DESCRIPTION OF PREFERRED EMBODIMENT

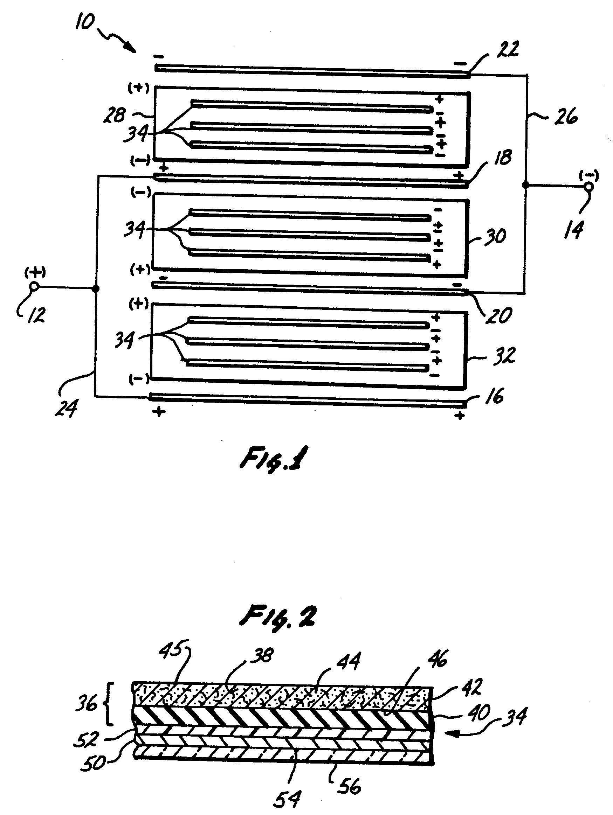

Referring now to Figure 1 a schematic representation of a bipolar battery 10 is shown, comprising a positive terminal 12 and a negative terminal 14. Battery 10 includes a monopolar grid or plate stack having two positive monopolar plates 16 and 18 and two negative monopolar plates 20 and 22.

Monopolar plates 16, 18, 20, 22 are stacked vertically with suitable electrolyte layers (not shown) provided. Positive monopolar plates 16 and 18 are connected in parallel by a bus bar, shown schematically at 24, to positive terminal 12 to provide an electric potential of about eight volts. The amount of current is determined by the size of positive monopolar plates 16 and 18. Negative monopolar plates 20 and 22 are connected by a bus bar, shown schematically at 26, to negative terminal 14 to also provide a voltage potential of about eight volts and a current varying depending upon the size of negative monopolar plates 20 and 22.

As is known in bipolar battery technology, bipolar plate groupings 28, 30, 32 are inserted between the monopolar plates 16, 18, 20, 22. Bipolar plate groupings 28, 30, 32 are positioned so that their uppermost and lowermost positive sides are adjacent to one of negative monopolar plates 20 and 22 and their uppermost and lowermost negative sides are adjacent to one of positive monopolar plates 16 and 18. Bipolar plate groupings 28, 30, 32 include a series of vertically stacked bipolar plates 34. Bipolar plates 34 are stacked vertically with suitable electrolyte layers (not shown) provided between bipolar plates 34 to provide a bipolar plate grouping having variable voltage depending upon the number of bipolar plates 34 present in a given grouping. It will be appreciated that the bipolar plate grouping is not connected to bus bars 24 and 26, but rather is secured within the battery stack by suitable non–conductive means (not shown).

Referring now to Figure 2, a unitary, bipolar battery plate 34 is illustrated. Plate 34 comprises a body 36 of woven fiberglass with the glass being C–glass (with a composition substantially as indicated previously), the strands 38 of which contain a coating of electrically conductive fluoride ion doped tin oxide. Body 36 has a porosity of about 75%. The average diameter of the individual fibers or strands 38 in body 36 is about 5 microns. The average thickness of the doped tin oxide coating is about 1 micron and about 2 mole % of the coating is fluoride ion.

The lower portion of fiberglass body 36 is embedded in a layer 40 of synthetic, epoxy–type thermoset polymer forming a fluid–impervious, through–conductive substrate.

The lower portion of body 36 may be embedded in thermoset layer 40 using various techniques. It is preferred that the lower portion of body 36 be contacted with the material making up thermoset layer 40 before the thermoset polymer is fully cured. One of the advantages of using thermoset polymers, such as epoxies, for layer 40 is that the viscosity of the monomers of pre–polymers is sufficiently low to allow the doped tin oxide coated substrate. e.g., fiberglass body 36, to be contacted with the monomers or pre–polymers with no substantial undue breakage of the substrate, e.g., individual glass fiber strands within body 36. This low viscosity of the thermoset's monomers of pre–polymers provides for improved control over the manufacture of the doped tin oxide coated substrate–matrix composite. Prior to being partially embedded in layer 40, body 36 (including the doped tin oxide coating) is coated with a silane derived coupling agent as described in U.S. Patent 4,154,638 to improve the bonding of body 36 with layer 40.

The upper portion of body 36 contains lead dioxide forming a positive active electrode layer 42. The particles 44 of lead dioxide are in contact with strands 38 which form conduction paths from top surface 45 to bottom surface 46 of layer 42.

The thickness of the resin layer 40 is preferably in the range of about 1 to about 20 mils (508 $\mu$m), more preferably about 4 to about 10 mils (254 $\mu$m).

Positive active electrode layer 42 is prepared according to methods well established in the art. The lead dioxide particles 44 can be dispersed in water to form a paste and impregnated into the upper portion of body 36 and dried, or a precursor paste of lead sulfate and litharge (PbO) such as one containing 75% lead sulfate and 25% litharge in water can be worked into the pores of the upper portion of body 36 and dried and cured. The paste is converted to lead dioxide by applying a charging potential to the paste.

A layer 50, which is conductive and stable under reducing conditions, is adhered to plate 34 by a conductive adhesive such as a film 52 of graphite–filled epoxy adhesive. Layer 50 can be a thin film or foil of lead preferably having a thickness in the range of 0.5 (12.7) to about 10 mils (254 $\mu$m), more preferably about 1 (25.4) to about 5 mils (127 $\mu$m). The fabrication of the bipolar plate is completed by depositing a layer 54 of negative active material such as lead paste onto layer 50 supported by a sheet 56 of glass scrim.

Battery 10 is placed in service and performs well in both the charge and discharge modes. The doped tin oxide coating on body 36 provides adequate conductivity. Importantly, this performance continues after a period of time in charge/discharge cyclic operation. This performance stability is vital in many lead−acid battery applications. Thus, the doped tin oxide coated, acid resistant glass fibers of body 36 have substantial stability at the aggressive, acidic/oxidative conditions present on the positive side of bipolar plates 34. In addition, the present system provides for outstanding bonding between the coated substrate and the matrix material. Weakness in this bonding has been one primary cause of failure in prior art bipolar plates. Improved bonding between the doped tin oxide coated substrate and the matrix material at conditions present in the lead−acid battery is one of the primary advantages of the present invention.

## EXAMPLES 1 TO 6

A series of six (6) materials were prepared for stability testing in 30 wt.% sulfuric acid, which simulates the electrolyte in a typical lead−acid battery. These six (6) materials were as follows:

Composition 1 − A glass mat composed of both C−glass and E−glass, typical compositions of which are as set forth previously. The mat or woven body was prepared from C−glass fiber bundles tied together (cross stitched) with E−glass strands. C−glass is more acid resistant than E−glass. The glass mat contained 33% by weight of E−glass and was coated, using conventional techniques with stannic oxide.

Composition 2 − E−glass fibers coated with stannic oxide were composited with polypropylene by compression molding polypropylene film sheets in a laminated mode to avoid undue breaking of the relatively fragile fibers.

Composition 3 − A stannic oxide coated glass mat as in Composition 1 was impregnated with polyvinylidene difluoride (PVDF) so that the final composite contained about 30% by weight of PVDF.

Composition 4 − Fibers of C−glass as used in Composition 1.

Composition 5 − Fibers of E−glass as used in Composition 1 coated with stannic oxide.

Composition 6 − Fibers of C−glass as used in Composition 1 coated with stannic oxide.

Distilled, deionized water used to prepare the 30 wt.% sulfuric acid electrolyte. Relative amounts of the electrolyte and composition were scaled to provide sufficient analyte for analytical purposes. The tests were conducted for period of time as shown in the table below at ambient temperature conditions. Periodic samples of electrolyte were taken and analyzed for calcium and tin.

The results of the stability testing were as follows:

| COMPOSITION | HOURS | Ca/Sn* | : | HOURS | Ca/Sn* | : | HOURS | Ca/Sn* |
|---|---|---|---|---|---|---|---|---|
| 1 | 48 | 6.1/2.8 | : | 143 | 20.3/6.7 | : | 268 | 258/2.7 |
| 2 | 48 | 2.7/1.6 | : | 143 | 9.4/2.6 | : | 268 | 14.7/0.5 |
| 3 | 48 | 4.7/1.9 | : | 143 | 13.9/1.3 | : | 268 | 20/0.4 |
| 4 | 48 | 1.6/− | : | 143 | 2/− | : | 268 | 2.5/− |
| 5 | 100 | 61/1.6 | : | − | −− | : | − | −− |
| 6 | 100 | 0.5/1.6 | : | − | −− | : | − | −− |

*The concentration of soluble calcium and tin in the electrolyte is expressed as weight parts per million (ppm) in the electrolyte sample

The calcium levels are initially relatively high and/or increase with time whenever E−glass is present (Compositions 1, 2, 3 and 5). In compositions containing only C−glass (Compositions 2 and 6), the calcium levels are initially relatively low and are substantially maintained at this low level with time.

These results clearly show that C−glass is superior to E−glass as a substrate material in the present invention. Deterioration of the substrate material can result in reduced conductivity or even complete battery failure.

Although the doped tin oxide coating does protect the substrate somewhat from acid attack, the combination of doped tin oxide coating on a glass substrate having increased inherent acid resistance relative to E−glass has been found not only to more effectively thwart electrolyte attack, but also to provide improved overall lead−acid battery performance. Preferably, additional means are employed to protect the substrate from attack in the aggressive environment of the lead−acid battery. The preferred use of certain forms of acid resistant glass substrates, coupling agents, doped tin oxide coating techniques, and/or polymeric matrix materials provide the present battery elements and batteries with improved electrochemical, physical and/or mechanical performance and/or performance stability.

## Claims

1. A battery element useful as at least a portion of the positive plate in a lead−acid battery comprising an acid resistant silica−containing glass coated with electrically conductive doped tin oxide, characterised in that said acid resistant silica−containing glass has a silica content and a composition which provides increased acid resistance relative to E−glass which typically has the following composition:

| silica | 54% by weight |
|---|---|
| alumina | 14% by weight |
| calcia | 18% by weight |
| magnesia | 5% by weight |
| soda + potassium oxide | 0.5% by weight |
| boria | 8% by weight |
| titania + iron oxide | 0.5% by weight |

said increased acid resistance being defined as reduced, relative to said E−glass, weight loss of the said doped tin oxide−coated battery element as the result of corrosion when subjected under normal lead−acid battery use conditions of temperature to 30% by weight lead−acid battery sulfuric acid.

2. A battery element according to claim 1, in which the dopant is fluoride ion.

3. A battery element according to claim 2, in which at least a portion of the acid resistant silica−containing glass is in the form of particles or fibres.

4. A battery element according to any of claims 1 to 3, which further comprises a positive active electrode material, provided that at least a portion of the acid resistant silica−containing glass has at least the acid resistance of C−glass which has the following composition:

| silica | 65% by weight |
|---|---|
| alumina | 4% by weight |
| calcia | 14% by weight |
| magnesia | 3% by weight |
| soda + potassium oxide | 9% by weight |
| boria | 5% by weight |
| titania + iron oxide | − |

and is in the form of particles or fibers, and at least a portion of the coated glass contacts the active electrode material.

5. A battery element according to any of claims 1 to 4, which further comprises a liquid impervious matrix layer having mutually opposing first and second surfaces situated such that at least a portion of the coated glass is embedded in the matrix layer to form a liquid impervious, conductive composite; a positive active electrode material layer located adjacent to said first surface of said matrix layer, provided that a portion of said coated glass contacts said electrode layer; a liquid impervious conductive layer that is resistant to reduction adjacent to said second surface of the matrix layer; and a negative active electrode layer located adjacent to said liquid impervious conductive layer.

6. A battery element according to claim 5, in which the matrix is a polymeric material having a polarity which is greater than that of polypropylene.

7. A battery element according to claim 6, in which the polymeric matrix material is a thermoset polymer.

**8.** A lead‒acid battery having a plurality of positive plates and a plurality of negative plates, in which battery elements in accordance with any of claims 1 to 7 are used as at least a part of the positive plates.

**9.** A lead‒acid battery having a plurality of bipolar plates, in which battery elements in accordance with any of claims 5 to 7 are used as the bipolar plates.

**Patentansprüche**

**1.** Als wenigstens ein Teil der positiven Platte in einer Blei‒Säure‒Batterie brauchbares Batterieelement, umfassend ein säurebeständiges, siliziumdioxidhaltiges, mit elektrisch leitfähigem dotiertem Zinnoxid beschichtetes Glas, dadurch gekennzeichnet, daß das säurefeste, siliziumdioxidhaltige Glas einen Siliziumdioxidgehalt und eine Zusammensetzung besitzt, welche eine erhöhte Säurebeständigkeit bezogen auf E‒Glas liefert, das typischerweise die folgende Zusammensetzung hat:

| | |
|---|---|
| Siliziumdioxid | 54 Gew.‒% |
| Aluminiumoxid | 14 Gew.‒% |
| Calciumoxid | 18 Gew.‒% |
| Magnesiumoxid | 5 Gew.‒% |
| Soda + Kaliumoxid | 0,5 Gew.‒% |
| Boroxid | 8 Gew.‒% |
| Titanoxid + Eisenoxid | 0,5 Gew.‒% |

wobei die erhöhte Säurefestigkeit als bezogen auf das E‒Glas verringerter Gewichtsverlust des dotierten, mit Zinnoxid beschichteten Batterieelements als Ergebnis der Korrosion definiert ist, wenn es 30 gew.‒%iger Blei‒Säure‒Batterieschwefelsäure bei einer Temperatur normaler Gebrauchsbedin‒ gungen einer Blei‒Säure‒Batterie ausgesetzt wird.

**2.** Batterieelement gemäß Anspruch 1, bei welchem das Dotierungsmittel ein Fluoridion ist.

**3.** Batterieelement gemäß Anspruch 2, bei welchem sich wenigstens ein Teil des säurebeständigen, siliziumdioxidhaltigen Glases in der Form von Teilchen oder Fasern befindet.

**4.** Batterieelement gemäß einem der Ansprüche 1 bis 3, welches weiter ein positiv wirksames Elektro‒ denmaterial enthält, vorausgesetzt, daß wenigstens ein Teil des säurebeständigen, siliziumdioxidhalti‒ gen Materials mindestens die Säurebeständigkeit von C‒Glas besitzt, welches die folgende Zusam‒ mensetzung hat:

| | |
|---|---|
| Siliziumdioxid | 65 Gew.‒% |
| Aluminiumoxid | 4 Gew.‒% |
| Calciumoxid | 14 Gew.‒% |
| Magnesiumoxid | 3 Gew.‒% |
| Soda + Kaliumoxid | 9 Gew.‒% |
| Boroxid | 5 Gew.‒% |
| Titanoxid + Eisenoxid | ‒ |

und sich in der Form von Teilchen oder Fasern befindet, und wenigstens ein Teil des beschichteten Glases das wirksame Elektrodenmaterial berührt.

**5.** Batterieelement gemäß einem der Ansprüche 1 bis 4, welches weiter eine flüssigkeitsundurchlässige Matrixschicht mit einer sich gegenüberliegenden ersten und zweiten Oberfläche, welche so angeordnet sind, daß wenigstens ein Teil des beschichteten Glases in die Matrixschicht eingebettet ist, um einen flüssigkeitsundurchlässigen Verbund zu bilden; ein positiv wirksames Elektrodenmaterial, welches der ersten Oberfläche der Matrixschicht benachbart angebracht ist, vorausgesetzt, daß ein Teil des beschichteten Glases die Elektrodenschicht berührt; eine flüssigkeitsundurchlässige, leitfähige, der zweiten Oberfläche der Matrixschicht benachbarte Schicht, welche gegenüber einer Reduktion be‒

ständig ist und eine negativ wirksame, der flüssigkeitsundurchlässigen, leitfähigen Schicht benachbart angebrachte Elektrodenschicht umfaßt.

6. Batterieelement gemäß Anspruch 5, bei welchem die Matrix ein polymeres Material mit einer Polarität ist, welche größer als diejenige von Polypropylen ist.

7. Batterieelement gemäß Anspruch 6, bei welchem das polymere Matrixmaterial ein wärmehärtbares Polymer ist.

8. Blei – Säure – Batterie mit einer Vielzahl positiver Platten und einer Vielzahl negativer Platten, in welcher Batterieelemente gemäß einem der Ansprüche 1 bis 7 als wenigstens ein Teil der positiven Platten verwendet werden.

9. Blei – Säure – Batterie mit einer Vielzahl bipolarer Platten, in welcher Batterieelemente gemäß einem der Ansprüche 5 bis 7 als bipolare Platten verwendet werden.

**Revendications**

1. Elément de batterie utilisable pour constituer au moins une partie de la plaque positive d'une batterie au plomb et à l'acide, comprenant un verre contenant de la silice résistant à l'acide revêtu d'oxyde d'étain dopé électriquement conducteur, caractérisé en ce que ledit verre contenant de la silice résistant à l'acide a une teneur en silice et une composition qui procurent une résistance à l'acide accrue par rapport à un verre E qui présente typiquement la composition suivante :

| | |
|---|---|
| silice | 54 % en poids |
| alumine | 14 % en poids |
| oxyde de calcium | 18 % en poids |
| oxyde de magnésium | 5 % en poids |
| soude + oxyde de potassium | 0,5 % en poids |
| oxyde de bore | 8 % en poids |
| oxyde de titane + oxyde de fer | 0,5 % en poids |

ladite résistance à l'acide accrue étant définie comme étant une perte de poids réduite, par rapport audit verre E, dudit élément de batterie revêtu d'oxyde d'étain dopé consécutive à la corrosion lorsqu'il est soumis, dans des conditions normales de température d'utilisation des batteries au plomb et à l'acide, à un acide sulfurique pour batterie au plomb et à l'acide à 30 % en poids.

2. Elément de batterie selon la revendication 1, dans lequel le dopant est l'ion fluorure.

3. Elément de batterie selon la revendication 2, dans lequel au moins une partie du verte contenant de la silice résistant à l'acide est sous forme de particules ou de fibres.

4. Elément de batterie selon l'une quelconque des revendications 1 à 3, qui comprend en outre un matériau d'électrode active positive, à condition qu'au moins une partie du verte contenant de la silice résistant à l'acide ait au moins la résistance à l'acide d'un verte C qui présente la composition suivante :

| silice | 65 % en poids |
|---|---|
| alumine | 4 % en poids |
| oxyde de calcium | 14 % en poids |
| oxyde de magnésium | 3 % en poids |
| soude + oxyde de potassium | 9 % en poids |
| oxyde de bore | 5 % en poids |
| oxyde de titane + oxyde de fer | – |

et soit sous forme de particules ou de fibres, et qu'au moins une partie du verre revêtu soit en contact avec le matériau d'électrode active.

5. Elément de batterie selon l'une quelconque des revendications 1 à 4, qui comprend en outre une couche de matrice imperméable aux liquides ayant des première et seconde surfaces mutuellement opposées situées de telle manière qu'au moins une partie du verte revêtu soit noyée dans la couche de matrice pour former un composite conducteur imperméable aux liquides, une couche de matériau d'électrode active positive située en position adjacente à ladite première surface de ladite couche de matrice, à condition qu'une partie dudit verte revêtu soit en contact avec ladite couche d'électrode, une couche conductrice imperméable aux liquides qui résiste à la réduction, en position adjacente à ladite seconde surface de la couche de matrice, et une couche d'électrode active négative située en position adjacente à ladite couche conductrice imperméable aux liquides.

6. Elément de batterie selon la revendication 5, dans lequel la matrice est une matière polymérique ayant une polarité supérieure à celle du polypropylène.

7. Elément de batterie selon la revendication 6, dans lequel la matière polymérique de la matrice est un polymère thermodurcissable.

8. Batterie au plomb et à l'acide comportant une multiplicité de plaques positives et une multiplicité de plaques négatives, dans laquelle des éléments de batterie selon l'une quelconque des revendications 1 à 7 sont utilisés pour constituer au moins une partie des plaques positives.

9. Batterie au plomb et à l'acide comportant une multiplicité de plaques bipolaires, dans laquelle des éléments de batterie selon l'une quelconque des revendications 5 à 7 sont utilisés comme plaques bipolaires.

Fig.1

Fig.2